# EUROPEAN PATENT SPECIFICATION

(11) **EP 1 863 666 B1**
(45) Date of publication and mention of the grant of the patent: **25.05.2011**
(21) Application number: 06725111.6
(22) Date of filing: 16.03.2006
(51) Int. Cl.: B60K 15/04

(54) **CONDUCTING SYSTEM FOR A FILLING PIPE**
LEITSYSTEM FÜR EIN FÜLLROHR
SYSTEME CONDUCTEUR POUR UN TUYAU DE REMPLISSAGE

(30) Priority: 18.03.2005 FR 0502741
(43) Date of publication of application: 12.12.2007
(73) Proprietor: Inergy Automotive Systems Research (Société Anonyme), 1120 Brussels (BE)
(72) Inventor: DUFAYS, Emmanuel, F-60350 Cuise La Motte (FR); PAOLINI, Gwereg, F-60150 Le Plessis Brion (FR); COULON, Philippe, F-60290 Rantigny (FR)
(74) Representative: Jacques, Philippe
(86) International application number: PCT/EP2006/060805
(87) International publication number: WO 2006/097515

(56) References cited:
- EP-A- 1 024 046
- US-A- 6 056 029
- US-A1- 2003 107 218
- US-A1- 2005 003 095
- US-B1- 6 446 826

## Description

The present invention relates to a conducting system for a filling pipe.

Motor vehicle fuel systems usually comprise a fuel tank and a filling pipe. The filling pipe enables the fuel tank to be filled from a fuel nozzle which the user inserts into the entrance orifice of the filling pipe (the filling head, as it is also called).

Such a conducting system is known from the document US 6 056 029.

In the case of tanks having a plastic pipe, it is known practice to make the plastic at least partly conducting and/or to remove electrostatic charges to the vehicle chassis in order to prevent electrostatic charges building up on its surface, with all the associated risks. For this purpose there is usually at least one metal part in contact (direct or indirect) with the plastic on the one hand, and with the vehicle chassis on the other hand.

In this way, a plastic pipe head is usually provided with a system comprising a metal bowl force-fitted into the filling pipe and a metal head fitted onto the pipe head whose function is to establish a contact with the vehicle chassis. The system also includes a guide for the filling nozzle; this guide is usually made in one piece which is inserted into the filling bowl, its inner profile assisting in positioning the nozzle during the filling operation. This part may be made of plastic or metal.

Where the pipe head is provided with the said system, the metal bowl is usually positioned by means of orientating features on the pipe head.

In certain prior-art designs, the bowl comprises teeth that make axial contact with the metal head when the latter is crimped around the outside of the pipe head. An O-ring is placed between the metal head and the plastic filling pipe to provide a peripheral seal between the filling pipe and the metal head.

A conducting path for static electricity generated during the filling operation is thus established between the nozzle, the nozzle guide, the filling bowl, the teeth of the bowl, the metal head and, via a metal lug fixed to the metal head, the vehicle chassis.

One problem with this system is that if there are moulding defects in the pipe, at least one of the teeth of the bowl may not be in contact with the metal head once the bowl is fitted. Static electricity that may build up on the surface of the filling bowl will not then be carried away efficiently into the vehicle chassis because the conducting path is no longer continuous. Another problem with this design is that the bowl is metallic (whereas plastics are lighter and easier to form into complex shapes).

To alleviate these problems and to simplify the fitting of the bowl to the pipe head, the subject of the invention is a conducting system for a fuel tank filling pipe, comprising
- a filling bowl made of a conducting plastic, with deformable teeth;
- a filling nozzle guide, also made of a conducting plastic, and in direct contact with the filling bowl;
- a metal head;
which system is characterized in that the bowl and the guide are inserted into the metal head in such a way that the teeth are in permanent radial contact with the metal head when the bowl and the guide are mounted in the filling pipe.

According to the invention, the bowl and the nozzle guide (the function of which was described above) are inserted into the metal head; that is to say, they are in fact crimped into the said head with the aid of the teeth, or, in other words, the metal head is engaged on these parts.

According to the invention, therefore, the bowl is provided around its periphery with deformable teeth which, when the bowl and the guide are inserted into the metal head, deform to give permanent radial contact with the metal head, even if there are moulding defects in for example the pipe head. Any static electricity generated by fuel being poured in through the filling nozzle can thus be carried away into the bodywork of the vehicle via the filling bowl, the teeth, and the metal head, this last being connected directly to the chassis of the vehicle.

According to the invention, the guide is in direct contact with the bowl - that is, it is either mounted in or on the bowl, or made in one piece with the bowl. In the system according to the invention, the filling bowl and the guide for the filling nozzle preferably form a one-piece unit.

The term "plastic" is used to denote any material comprising at least one synthetic resin polymer.

All types of plastic may be suitable. Very suitable plastics belong to the category of thermoplastics.

The term "thermoplastic" denotes any thermoplastic polymer, including thermoplastic elastomers, and their blends. The term "polymer" denotes both homopolymers and copolymers (especially binary or ternary copolymers). Without implying any limitation, examples of such copolymers are: random copolymers, linear block copolymers, other block copolymers and graft copolymers.

Any type of thermoplastic polymer or copolymer whose melting point is below the decomposition temperature is suitable. Synthetic thermoplastics that have a melting range spread over at least 10 degrees Celsius are particularly suitable. Examples of such materials include those that exhibit polydispersion in their molecular weight.

In particular, polyolefins, thermoplastic polyesters, polyketones, polyamides and copolymers thereof may be used. A blend of polymers or copolymers may also be used, as may a blend of polymeric materials with inorganic, organic and/or natural fillers such as the following non-exhaustive list: carbon, salts and other inorganic derivatives, and natural or polymeric fibres. It is also possible to use multilayer structures consisting of stacked layers bonded together, comprising at least one of the polymers or copolymers described above.

More preferably, the plastic of the bowl/guide unit is conducting high-density polyethylene (HDPE) (that is to say, it comprises a conducting filler - such as carbon black or carbon fibres - and/or a conducting coating). This part or these parts (depending on whether or not they are formed in one piece) are preferably produced by injection moulding (which makes it possible to overmould them onto one or more inserts, such as a reinforcing ring for example: see later).

According to the invention, the bowl/guide unit is force-fitted into the filling pipe. Movement of the unit relative to the pipe (axially and in rotation) is preferably prevented by an appropriate design. For example, it is advantageous to provide depressions or recesses (stamped portions) in the pipe to correspond to the teeth, in such a way that it can support axially and prevent rotation of the bowl/guide unit in the pipe because of the teeth and stamped portions acting together. In this variant, the teeth therefore have a dual function of conductivity (removal of charges) and attachment.

The teeth are preferably flat (meaning that they are thin and of elongate shape as illustrated in the figures attached to this application). These teeth preferably give the bowl/guide unit a diameter greater than that of the opening in the metal head designed to house it. What this means is that their size is such that they are compressed by the head during assembly, thus ensuring permanence of the contact whatever the quality of the moulding of the parts (distortion, tolerances, etc.). It is advantageous to provide the system according to the invention with a seal (such as an O-ring) to seal the assembly. This seal is preferably situated on the filling pipe in a position such that it is compressed by the metal head once the system is assembled. A groove may be provided on the pipe to house and locate the seal.

In a preferred variant of the invention, a metal annulus is present on the periphery of the bowl/guide unit, so that when the unit is installed, the annulus gives sufficient rigid support to prevent the filling pipe from deforming with the effect of age, and, by the same token, to prevent the seal deteriorating. This annulus can be crimped onto the bowl, but the bowl is preferably overmoulded onto it (to eliminate an assembly step). Most particular preference is given to overmoulding a bowl/guide unit onto it in one piece. The present invention also relates to a process for producing (assembling) a conducting system as described above. This process comprises the following steps :
- the filling pipe is provided with a seal;
- a bowl/guide unit consisting of one part, or of two parts assembled together, and provided with deformable radial teeth is force-fitted into it; and the whole is force-fitted into a metal head, simultaneously compressing both the seal and the teeth.

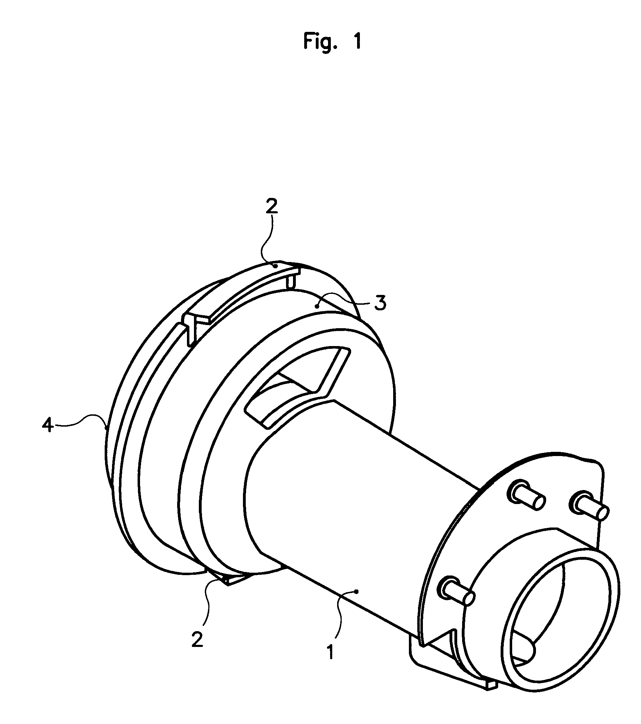

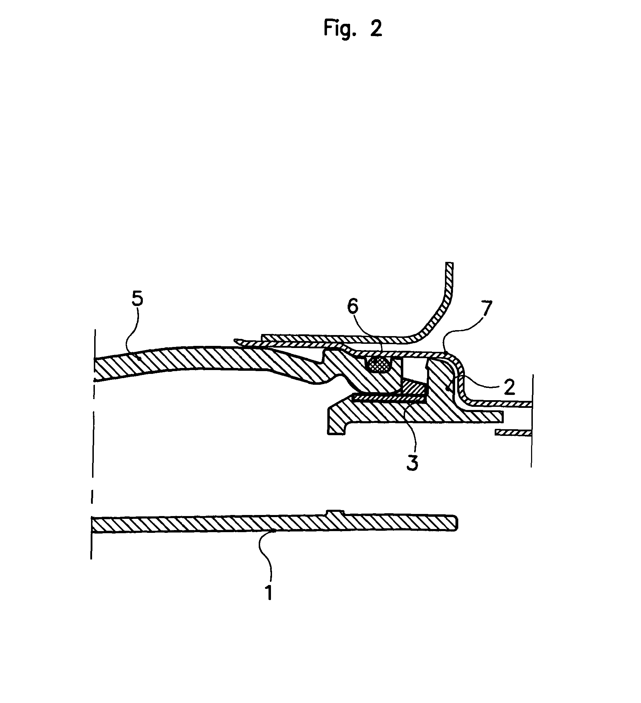

Without limiting the scope of the invention, Figures 1 to 2 illustrate a particular embodiment of the invention.

Figure 1 shows the bowl/guide unit (4), produced in one piece, in which the guide (1) guides the nozzle into the pipe head. A metal ring (3) is crimped to the periphery of the unit (4). Teeth (2) are located around the periphery of the unit (4).

Figure 2 shows the system mounted on the pipe head (5). An O-ring (6) is compressed between the periphery of the pipe head (5) and the metal head (7) inside which the unit (4) is crimped, the teeth (2) being in contact with the inside of the metal head (7).

## Claims

1. Conducting system for a fuel tank filling pipe (5), comprising
- a filling bowl made of a conducting plastic, with deformable teeth (2);
- a filling nozzle guide, also made of a conducting plastic, and in direct contact with the filling bowl;
- a metal head (7);
whereby the bowl and the guide are inserted into the metal head (7) in such a way that the teeth (2) are in permanent radial contact with the metal head (7) when the bowl and the guide (4) are mounted in the filling pipe (5).

2. System according to claim 1, **characterized in that** the filling bowl and the guide form a one-piece unit (4).

3. System according to the preceding claim, **characterized in that** the material of the unit (4) is conducting high-density polyethylene (HDPE).

4. System according to any one of the claims 2 or 3, **characterized in that** the unit (4) is produced using the injection-moulding technique.

5. System according to any one of the preceding claims, **characterized in that** the bowl/guide unit (4) includes a metal ring (3) on its periphery.

6. System according to the preceding claim, in which the bowl or the unit (4) is overmoulded onto the metal ring (3).

7. System according to any one of the preceding claims, **characterized in that** the filling pipe (5) comprises stamped portions corresponding to the teeth (2) and capable of supporting axially and preventing rotation of the bowl/guide unit (4) in the pipe (5).

8. System according to any one of the preceding claims, **characterized in that** the teeth (2) give the bowl/guide unit (4) a diameter greater than that of the opening in the metal head (7) designed to house it.

9. System according to any one of the preceding claims, **characterized in that** a seal (6) is situated on the filling pipe (5) in a position such that it is compressed by the metal head (7) once the system is assembled.

10. Process for producing a conducting system according to any one of the preceding claims and comprising the following steps:
- the filling pipe (5) is provided with a seal (6);
- a bowl/guide unit (4) consisting of one part, or of two parts assembled together, and provided with deformable radial teeth (2) is force-fitted into it; and
- the whole is force-fitted into a metal head (7), simultaneously compressing both the seal (6) and the teeth (2).

## Patentansprüche

1. Leitsystem für ein Kraftstofftankfüllrohr (5) mit
- einem aus einem leitenden Kunststoff hergestellten Füllbecher mit verformbaren Zähnen (2),
- einer Zapfpistolenführung, die ebenfalls aus einem leitenden Kunststoff hergestellt ist und in direktem Kontakt mit dem Füllbecher steht, und
- einem Metallkopf (7),
wobei der Becher und die Führung so in den Metallkopf (7) eingeführt sind, dass die Zähne (2) in permanentem radialem Kontakt mit dem Metallkopf (7) stehen, wenn der Becher und die Führung (4) im Füllrohr (5) montiert sind.

2. System nach Anspruch 1, **dadurch gekennzeichnet, dass** der Füllbecher und die Führung eine einteilige Einheit (4) bilden.

3. System nach dem vorhergehenden Anspruch, **dadurch gekennzeichnet, dass** das Material der Einheit (4) leitendes Polyethylen hoher Dichte (HDPE) ist.

4. System nach Anspruch 2 oder 3, **dadurch gekennzeichnet, dass** die Einheit (4) unter Verwendung der Spritzgusstechnik hergestellt ist.

5. System nach einem der vorhergehenden Ansprüche, **dadurch gekennzeichnet, dass** die Becher/Führungseinheit (4) an ihrem Umfang einen Metallring (3) aufweist.

6. System nach dem vorhergehenden Anspruch, wobei der Metallring (3) mit dem Becher oder der Einheit (4) umspritzt ist.

7. System nach einem der vorhergehenden Ansprüche, **dadurch gekennzeichnet, dass** das Füllrohr (5) gestanzte Abschnitte umfasst, die den Zähnen (2) entsprechen und in der Lage sind, die Becher/Führungseinheit (4) im Rohr (5) axial zu stützen und ihre Drehung zu verhindern.

8. System nach einem der vorhergehenden Ansprüche, **dadurch gekennzeichnet, dass** die Zähne (2) der Becher/Führungseinheit (4) einen Durchmesser verleihen, der größer als der der Öffnung im Metallkopf (7) ist, die zu ihrer Aufnahme ausgelegt ist.

9. System nach einem der vorhergehenden Ansprüche, **dadurch gekennzeichnet, dass** eine Dichtung (6) auf dem Füllrohr (5) in einer solchen Position angeordnet ist, dass sie nach dem Zusammenbau des Systems vom Metallkopf (7) zusammengedrückt wird.

10. Verfahren zur Herstellung eines Leitsystems nach einem der vorhergehenden Ansprüche mit den folgenden Schritten:
- das Füllrohr (5) wird mit einer Dichtung (6) versehen,
- eine Becher/Führungseinheit (4), die aus einem Teil oder aus zwei zusammengebauten Teilen besteht und mit verformbaren radialen Zähnen (2) versehen ist, ist durch Presspassung darauf angebracht und
- das Ganze ist durch Presspassung in einen Metallkopf (7) angebracht, wobei sowohl die Dichtung (6) als auch die Zähne (2) gleichzeitig zusammengedrückt werden.

## Revendications

1. Dispositif conducteur pour une tubulure de remplissage (5) d'un réservoir à carburant, comprenant
- un bol de remplissage en un matériau plastique conducteur et muni d'ergots déformables (2);
- un guide pour pistolet de remplissage également en un matériau plastique conducteur et en contact direct avec le bol de remplissage;
- une tête métallique (7);
et dans lequel le bol et le guide sont insérés dans la tête métallique (7) de façon à ce que les ergots (2) soient en contact radial permanent avec la tête métallique (7) lorsque le bol et le guide (4) sont montés à l'intérieur de la tubulure de remplissage (5).

2. Dispositif selon la revendication 1 **caractérisé en ce que** le bol de remplissage et le guide constituent un ensemble (4) réalisé d'une seule pièce.

3. Dispositif selon la revendication précédente, **caractérisé en ce que** le matériau de l'ensemble (4) est du polyéthylène haute densité (HDPE) conducteur.

4. Dispositif selon la revendication 2 ou 3, **caractérisé en ce que** l'ensemble (4) est réalisé en utilisant la technique de moulage par injection.

5. Dispositif selon l'une quelconque des revendications précédentes, **caractérisé en ce que** l'ensemble bol/guide (4) comprend sur sa périphérie une bague métallique (3).

6. Dispositif selon la revendication précédente, dans lequel la bague métallique (3) est surmoulée par le bol ou l'ensemble (4).

7. Dispositif selon l'une quelconque des revendications précédentes, **caractérisé en ce que** la tubulure de remplissage (5) comprend des poinçonnages correspondants aux ergots (2) et susceptibles de soutenir axialement et de bloquer la rotation de l'ensemble bol/guide (4) dans la tubulure (5).

8. Dispositif selon l'une quelconque des revendications précédentes, **caractérisé en ce que** les ergots (2) confèrent à l'ensemble bol/guide (4) un diamètre supérieur à celui de l'ouverture dans la tête métallique (7) destinée à le recevoir.

9. Dispositif selon l'une quelconque des revendications précédentes, **caractérisé en ce qu'**un joint (6) est situé sur la tubulure de remplissage (5) à un endroit tel qu'il est comprimé par la tête métallique (7) une fois le dispositif monté.

10. Procédé pour la fabrication d'un dispositif conducteur selon l'une quelconque des revendications précédentes et comprenant les étapes suivantes :
- on munit la tubulure de remplissage (5) d'un joint d'étanchéité (6);
- on y insère en force un ensemble bol/guide (4) constitué d'une pièce ou de deux pièces assemblées, et muni d'ergots radiaux déformables (2); et
- on insère le tout en force dans une tête métallique (7) en comprimant à la fois le joint (6) et les ergots (2).
